# Europäisches Patentamt
## European Patent Office
## Office européen des brevets

(19)

(11) Veröffentlichungsnummer: **0 023 470**

**A2**

(12)

# EUROPÄISCHE PATENTANMELDUNG

(21) Anmeldenummer: **80810224.8**

(51) Int. Cl.³: **A 47 K 5/12**

(22) Anmeldetag: **09.07.80**

(30) Priorität: **17.07.79 CH 6623'79**

(43) Veröffentlichungstag der Anmeldung:
**04.02.81 Patentblatt 81/5**

(84) Benannte Vertragsstaaten:
**AT BE CH DE FR GB IT LI LU NL SE**

(71) Anmelder: **Europtool Trust**
**Austrasse 42**
**FL-9490 Vaduz(LI)**

(72) Erfinder: **Sandro, Arabian**
**Rhätikonstrasse 35**
**FL-9490 Vaduz(LI)**

(74) Vertreter: **Frauenknecht, Alois J.**
**c/o PPS Polyvalent Patent Service AG Fohrhölzlistrasse 19**
**CH-5443 Niederrohrdorf(CH)**

(54) **Seifenlösungs-Dosiervorrichtung.**

(57) Eine Seifenlösungs-Dosiervorrichtung für den Einsatz in öffentlichen und privaten Toiletten etc. weist einen austauschbaren Vorratsbehälter (1) für eine wässerige Seifenlösung auf. Dieser Vorratsbehälter (1) besitzt ein flexibles Anschluss-Stück (2), welches auf einem Dorn (3) einer Füllstandsanzeige (4) aufgeschoben ist.

Beim Betrieb der Dosiereinrichtung entleert sich zuerst der Vorratsbehälter (1), anschliessend die Füllstandanzeige (4) und dann erst ein in der Dosiervorrichtung enthaltenes Reservoir. Dadurch kann der Inhalt des Vorratsbehälters vollständig genutzt werden; der Betrieb der Dosiervorrichtung wird bis zum gelegentlichen Austausch des Vorratsbehälters (1) durch das Reservoir aufrechterhalten.

Zur Erhöhung des Kontrastes der Füllstandsanzeige kann diese einen in die Seifenlösung eintauchenden Körper aufweisen, welcher bei leerem Vorratsbehälter totalreflektiert. Zur Ausnutzung gerichteter Lichtquellen können Prismen und zur farbigen Anzeige optische Filter vorgesehen werden.

FIG.1

Europtool Trust
FL-9490 Vaduz
(Fürstentum Liechtenstein)

3703 EPA

- 1 -

## Seifenlösungs-Dosiervorrichtung

Die vorliegende Erfindung bezieht sich auf eine Seifenlösungs-Dosiervorrichtung mit einem austauschbaren, in oder auf einem Gehäuse angeordneten Vorratsbehälter für eine wässerige Seifenlösung, einer Vorrichtung zum Entleeren des Vorratsbehälters, einer Füllstandsanzeige sowie einer portionenweise seifenspendenden oder schaumbildenden Vorrichtung.

Es sind Vorrichtungen gemäss dem Oberbegriff des Anspruchs 1 bekannt (z.B. CWS International), welche in zahlreichen öffentlichen und privaten Toiletten zur Seifenabgabe bzw. bei einer hygienischen Handreinigung eingesetzt sind.

Aufgrund der häufigen Benutzung dieser Geräte stellt sich im besonderen Masse das Problem der Nachfüllung von wässeriger Seifenlösung. Die heute in der Praxis oft eingesetzten Vorratsbehälter mit Füllstandsüberwachung weisen den Nachteil eines relativ umständlichen Austausches auf. Ferner besteht eine Kopplung ihres Flüssigkeitsniveaus an das Reservesystem; sie zeigen daher nicht eindeutig das Leersein des Vorratsbehälters an.

Es ist daher Aufgabe der Erfindung, eine Seifenlösungs-Dosiervorrichtung zu schaffen, bei welcher auf einfachste Weise der Vorratsbehälter austauschbar ist.

Diese Aufgabe wird durch die in Anspruch 1 aufgeführten Merkmale in einfacher Weise gelöst.

In den weiteren Ansprüchen sind vorteilhafte Weiterbildungen bzw. Varianten aufgeführt.

Der Vorteil der Ausführung nach Anspruch 2 besteht darin, dass ein leerer Vorratsbehälter unverzüglich optisch signalisiert wird, während gleichzeitig in der schaumbildenden Vorrichtung noch eine Reserve an wässeriger Seifenlösung vorhanden ist, so dass genügend Zeit bleibt, um den leeren Vorratsbehälter ohne Betriebsunterbruch auszutauschen.

Die Ausgestaltung nach Anspruch 3 erlaubt den Einsatz eines einstückigen Teiles, welches einerseits der Entleerung des Vorratsbehälters und andererseits gleichzeitig seiner Füllstandsanzeige dient.

Die Weiterbildung nach Anspruch 4 ergibt eine einfache und sehr praktische Anordnung, insbesondere weil sich die Füllstandsanzeige bei vollständig leerem Vorratsbehälter ebenfalls selbständig entleert, so dass kein Verlust an Seifenlösung auftritt und/oder zufolge einer Fehlanzeige der Vorratsbehälter vorzeitig durch einen neuen ersetzt wird.

Die Variante nach Anspruch 5 gewährleistet durch den flexiblen Schlauch ein besonders einfaches Auswechseln des Vorratsbehälters.

Die Ausgestaltung nach Anspruch 6 ergibt durch den Einsatz eines optisch dichten Körpers (Glas, Acrylglas etc.) einen hohen Kontrast; ein leerer Vorratsbehälter führt zu einer internen Totalreflektion im optischen Körper.

Die Weiterbildung nach Anspruch 7 erbringt eine besonders wirkungsvolle farbige Anzeige.

Die Kombination eines optischen Körpers mit einem Lichtleiter nach Anspruch 8 weist den Vorteil einer räumlichkonstruktiven Trennung des Abflusssystems von der Gehäusewand auf.

Durch den Einsatz eines Lichtleiterbündels nach Anspruch 9 ergibt sich der Vorteil hoher Flexibilität in der Auslegung und bei der Montage.

Die Weiterbildung nach Anspruch 10 ergibt den Vorteil einer Anzeige von besonders hohem Kontrast bei optimaler Nutzung bzw. Anpassung an die Beleuchtungsverhältnisse der Umgebung.

Die Ausführungsform eines Vorratsbehälters nach Anspruch 11 ist besonders wirtschaftlich herstellbar und lässt eine gute Ausnutzung des im Gehäuse vorhandenen Raumes zu.

Im folgenden wird an Hand von Zeichnungen die Erfindung näher erläutert.

Es zeigt

Fig. 1 eine Seifenlösungs-Dosiervorrichtung mit abgenommener Deckhaube in Vorderansicht und Teil-Schnittdarstellung,

Fig. 2 die Ausführung einer Füllstandsanzeige aus Fig. 1 in Schnittdarstellung II-II,

Fig. 3 eine Variante zu Fig. 2 mit betrachterseitig eingebautem, totalreflektierendem, kegelförmigem Körper,

Fig. 4 eine weitere beispielsweise Ausführung eines Vorratsbehälters mit seitlichem Anschluss-Stück zur Einführung eines Dorns zur Füllstandsüberwachung und einem bodenseitig eingesteckten Abfluss-Dorn und

Fig. 5 einen Abfluss-Dorn mit Verzweigung und integrierter Füllstandsanzeige mit optischem Filter und Fresnel-Prisma.

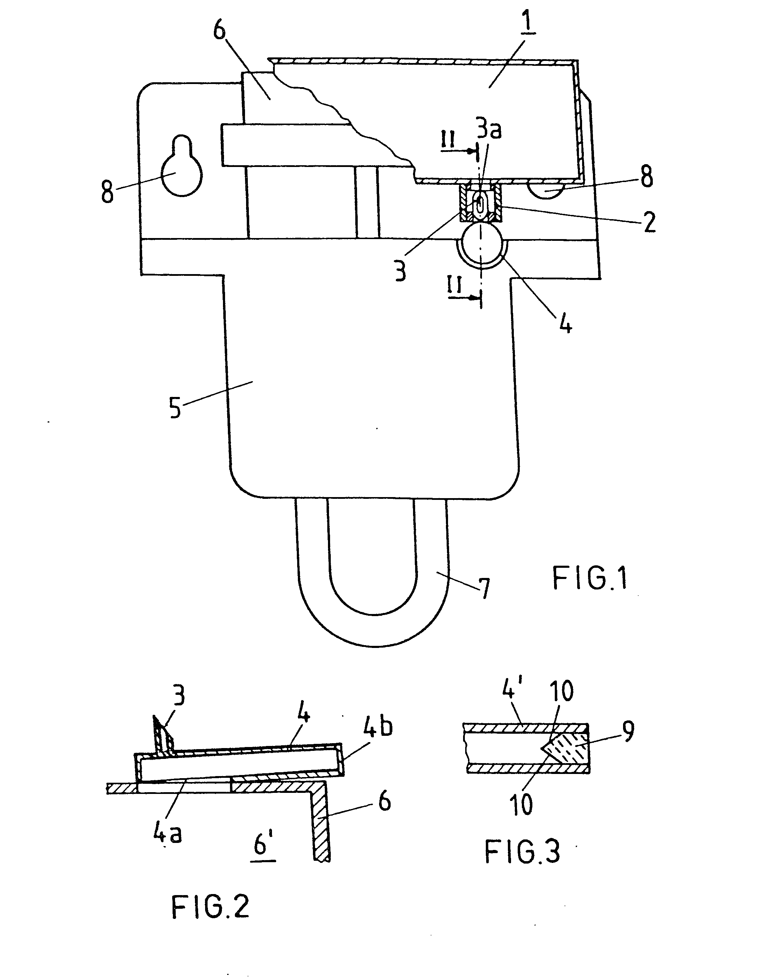

In Fig. 1 ist ein Vorratsbehälter mit 1 bezeichnet. Am Vorratsbehälter 1 ist ein Anschluss-Stück 2 angebracht, in welches ein Dorn 3 mit einer Bohrung 3a ragt. Der Dorn 3 sitzt auf einer röhrchenförmigen Füllstandsanzeige 4, welche aus einer Bohrung in einem Gehäuse 5 herausragt. Die Füllstandsanzeige 4 ist mit dem inneren (nicht dargestellten) Reserve-Vorratsbehälter einer schaumbildenden Vorrichtung 6 verbunden. Die schaumbildende Vorrichtung 6 weist einen Betätigungshebel 7 zur portionenweisen Bildung von Seifenschaum auf.

Die in Fig. 1 dargestellte Seifenlösungs-Dosiervorrichtung ist zur Wandmontage, beispielsweise in der Nähe von Lavabos (Toiletten, etc.) vorgesehen; hierzu dienen die Bohrungen 8. Der Vorratsbehälter 1 besteht aus Hart-Polyvinylchlorid (PVC), in welches das Anschluss-Stück 2 aus Weich-PVC eingeschweisst ist.

Solange sich wässerige Seifenlösung im Vorratsbehälter 1 befindet, erscheint die Frontseite der Füllstandsanzeige 4 betrachterseitig dunkel, sobald diese jedoch leer ist, erscheint sie hell, d.h. der Zeitpunkt zum Auswechseln des Vorratsbehälters ist gekommen. Hierzu wird vom Gehäuse 5 die nicht dargestellte Abdeckhaube abgenommen, so dass der Vorratsbehälter 1 freiliegt. Dieser wird nun einfach vom Dorn 3 abgezogen und ein neuer Vorratsbehälter 1 mit seinem hier noch membranartig verschlossenen

- 5 -

Anschluss-Stück 2 auf den Dorn 3 aufgesetzt. Durch leichtes Perforieren der oberen Wandung des Vorratsbehälters 1 wird ein Eintritt der Umgebungsluft in den Vorratsbehälter 1 möglich; es füllt sich die Bohrung 3a des Dorns 3, die Füllstandsanzeige 4 sowie das im Inneren der schaumbildenden Vorrichtung 6 befindliche Reservoir mit wässeriger Seifenlösung. Nach Aufsetzen der Abdeckung ist das Gerät, ohne dass ein Betriebsunterbruch entstanden wäre, weiter einsatzfähig.

Aus Fig. 2 ist die Ausgestaltung der Füllstandsanzeige 4 sowie des aufgesetzten Dornes 3 ersichtlich. Die Füllstandsanzeige 4 und der Dorn 3 sind einstückig ausgeführt und bestehen aus transparentem Kunststoff (Acrylglas). Die Füllstandsanzeige 4 weist eine längliche Ausflussöffnung 4a auf, welche kongruent mit einer schlitzartigen Öffnung in einem Reservoir 6' der schaumbildenden Vorrichtung 6 in Verbindung steht.

Einzelheiten einer Variante zu Fig. 2 sind aus Fig. 3 ersichtlich. In der durch eine Schlauchleitung gebildeten Füllstandsanzeige 4' ist ein optischer Körper 9 aus Glas mit einer kegelförmigen, in Luft intern totalreflektierenden Grenzfläche 10 auf der dem Betrachter zugewandten Seite des Geräts eingeklebt.

Diese Art Füllstandsanzeige weist einen höheren Kontrast auf, da das einfallende Licht bei vollem Vorratsbehälter 1 zum dichteren Medium, d.h. in die wässerige Seifenlösung abgestrahlt und dort absorbiert wird. Ist der Vorratsbehälter 1 bzw. die Füllstandsanzeige 4' jedoch leer, erfolgt eine Totalreflektion des Lichtes an den Grenzflächen 10; die Anzeige erscheint hell.

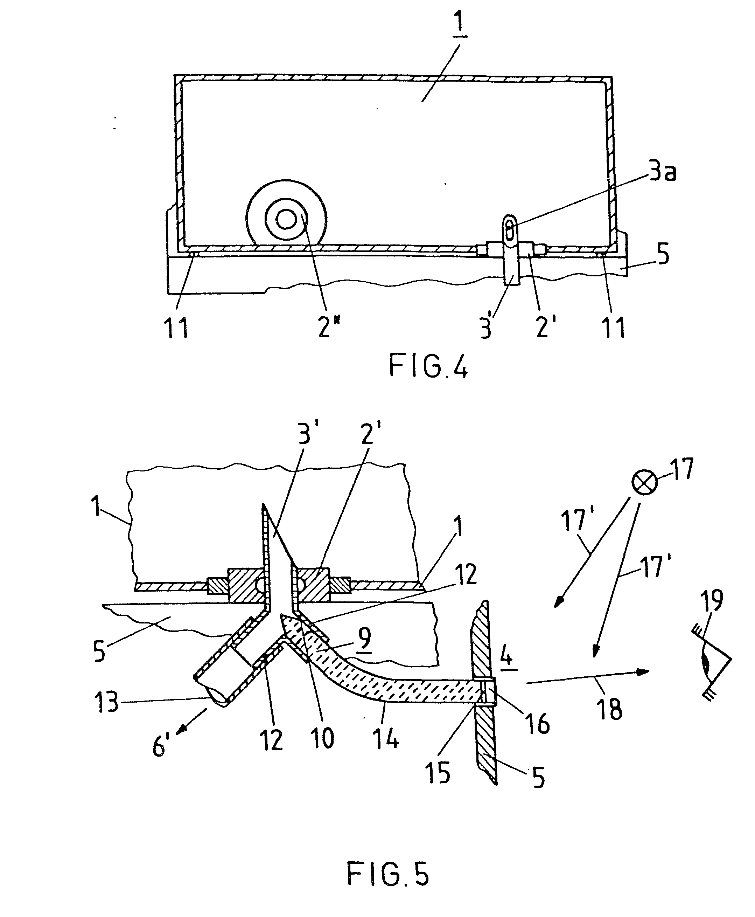

Aus Fig. 4 ist ein weiterer Vorratsbehälter 1 ersichtlich, mit einem bodenseitigen Anschluss-Stück 2' für den Abfluss und einem seitlichen Anschluss-Stück 2" für eine Füllstandsüberwachung.

Die Wirkungsweise der Anordnung nach Fig. 4 ist dieselbe wie in Fig. 1, jedoch besteht der Vorratsbehälter 1 aus beschichtetem Papier und ist nachgiebig. Zur Verstärkung und als Auflage dienen Noppen bzw. Rippen 11. Diese Variante weist den Vorteil einer sehr wirtschaftlichen Herstellung sowie einer besseren Nutzung des im Gehäuse 5 zur Verfügung stehenden Raumes auf. Im bodennahen Bereich ist das seitliche Anschluss-Stück 2" eingeklebt, in welchem eine endseitig mit einem Dorn versehene Füllstandsanzeige 4 eingesteckt werden kann.

Ein bevorzugtes Ausführungsbeispiel eines Vorratsbehälters 1 mit einem Anschluss-Stück 2' und im Abflussdorn integrierter Füllstandsanzeige 4 lässt sich aus Fig. 5 ersehen. Diese Darstellung zeigt den Dorn 3' mit seinen beiden Verzweigungen 12, an die linke Verzweigung 12 ist ein flexibler Schlauch 13 aus Gummi angeschlossen, welcher mit dem Reservoir 6' in Verbindung steht. Ein leicht gekrümmter Lichtleiter 14 aus Acrylglas ist zur Frontseite des Gehäuses 5 geführt. Dieser Lichtleiter 14 besitzt im Inneren der rechtsseitigen Verzweigung 12 wiederum eine in Luft totalreflektierende Grenzfläche 10. Seine Aussenseite ist poliert, endseitig ist ein optisches Filter 15 (Rotfilter) aufgesetzt; diesem ist ein handelsübliches Fresnel-Prisma 16 vorgelagert.

Diese Anordnung eignet sich insbesondere in Räumen, in denen eine deckenseitig angebrachte Lichtquelle 17 vorhanden ist. Die von der Lichtquelle 17 ausgehenden Lichtstrahlen 17' erfahren durch das Fresnel-Prisma 16 eine Umlenkung und gelangen ins Innere des Lichtleiters 14 und werden wiederum bei gefüllter Füllstandsanzeige in die wässerige Seifenlösung abgestrahlt und absorbiert; die Anzeige erscheint dunkel. Ist jedoch die Füllstandsanzeige bzw. der Vorratsbehälter 1 leer, ergibt sich wiederum an der totalreflektierenden Grenzfläche 10 eine Umlenkung des Lichtes, welches durch fast horizontal von der Fresnel-Linse 16 ausgehende Lichtstrahlen 18 für einen Betrachter 19 als helles, klares Bild ersichtlich ist.

Der Erfindungsgegenstand lässt sich in zahlreichen Varianten variieren, insbesondere kann auch der Deckel des Gehäuses 5 so ausgestaltet werden, dass der Vorratsbehälter zentriert wird und beim Schliessen automatisch die im Anschluss-Stück enthaltene Membrane durchstösst und den Vorratsbehälter betriebsbereit macht. Anstelle einer Vielzahl von Prismen (Fresnel-Linse) kann selbstverständlich auch ein einziges Prisma grösserer Bauhöhe verwendet werden.

Bei stark benetzenden Seifenlösungen kann es ferner vorteilhaft sein, die intern totalreflektierende Grenzfläche 10 mit einer die Benetzung hemmenden Schicht zu versehen, beispielsweise mit handelsüblichem Silane etc.

Die Form des Vorratsbehälters wird vorteilhafterweise so gewählt, dass ein maximales Füllvolumen entsteht. Das dem Abfluss der Seifenlösung dienende Anschluss-Stück soll auf dem tiefsten Niveau des Behälters angebracht werden, damit ein vollständiges Entleeren möglich ist.

Der Vorratsbehälter kann teilweise oder vollständig aus transparentem Material gefertigt sein; eine Überwachung des Vorrats an Seifenlösung kann somit direkt erfolgen. Demzufolge kann das Gerätegehäuse ebenfalls vollständig oder teilweise transparent sein; ebenso kann bei entspre-

Europtool                                   3703 EPA

- 8 -

chender Ausgestaltung des Vorratsbehälters auf eine Abdeckhaube verzichtet werden.

Europtool
3703 EPA

0023470

- 9 -

Patentansprüche
_____

1. Seifenlösungs-Dosiervorrichtung mit einem austauschbaren, in oder auf einem Gehäuse angeordneten Vorratsbehälter für eine wässerige Seifenlösung, einer Vorrichtung zum Entleeren des Vorratsbehälters, einer Füllstandsanzeige sowie einer portionenweise seifenspendenden oder schaumbildenden Vorrichtung, dadurch gekennzeichnet, dass der Vorratsbehälter (1) mit einem wenigstens partiell elastischen Anschluss-Stück (2) versehen ist und dass an der Vorrichtung zum Entleeren wenigstens ein Dorn (3) mit einer Bohrung (3a) vorgesehen ist.

2. Seifenlösungs-Dosiervorrichtung nach Anspruch 1, dadurch gekennzeichnet, dass der Dorn (3) mit einer Füllstandsanzeige (4) versehen ist, wobei zwischen dem Vorratsbehälter (1), dem Dorn (3) und der Füllstandsanzeige (4) kommunizierende Gefässe gebildet sind.

3. Seifenlösungs-Dosiervorrichtung nach Anspruch 2, dadurch gekennzeichnet, dass die Füllstandsanzeige (4) direkt mit dem Vorratsbehälter (1) verbunden ist.

4. Seifenlösungs-Dosiervorrichtung nach Anspruch 2 oder 3, dadurch gekennzeichnet, dass ein einem Betrachter zugewandtes Schauglas (4b) der Füllstandsanzeige (4) oberhalb ihrer Ausflussöffnung (4a) angeordnet ist.

5. Seifenlösungs-Dosiervorrichtung nach Anspruch 4, dadurch gekennzeichnet, dass die Ausflussöffnung (4a) über einen Schlauch (13) mit der schaumbildenden Vorrichtung (6) verbunden ist.

6. Seifenlösungs-Dosiervorrichtung nach einem der vorangehenden Ansprüche, dadurch gekennzeichnet, dass die Füllstandsanzeige (4) betrachterseitig einen optischen Körper (9) mit wenigstens einer totalreflektierenden Grenzfläche (10) aufweist.

7. Seifenlösungs-Dosiervorrichtung nach Anspruch 6, dadurch gekennzeichnet, dass der optische Körper (9) eingefärbt ist, oder diesem betrachterseitig ein optisches Filter (15) vorgesetzt ist.

8. Seifenlösungs-Dosiervorrichtung nach den Ansprüchen 6 oder 7, dadurch gekennzeichnet, dass der optische Körper (9) als Lichtleiter (14) ausgebildet ist.

9. Seifenlösungs-Dosiervorrichtung nach den Ansprüchen 6 oder 7, dadurch gekennzeichnet, dass der optische Körper (9) an ein Lichtleiterbündel angekoppelt ist.

10. Seifenlösungs-Dosiervorrichtung, nach einem der Ansprüche 2 bis 9, dadurch gekennzeichnet, dass der Füllstandsanzeige (4) betrachterseitig ein Prisma oder eine Fresnel-Linse (16) aufgesetzt ist.

11. Seifenlösungs-Dosiervorrichtung nach Anspruch 1, dadurch gekennzeichnet, dass der Vorratsbehälter (1) aus nachgiebigem Material besteht und dass dieser wenigstens durch ein zentrales und/oder seitliches, elastisches weiteres Anschluss-Stück (2') abgeschlossen ist.

FIG.1

FIG.2

FIG.3

0023470

FIG.4

FIG.5